# EUROPEAN PATENT APPLICATION

(11) **EP 2 529 649 A1**
(43) Date of publication of application: **05.12.2012**
(21) Application number: 11168013.8
(22) Date of filing: 30.05.2011
(51) Int. Cl.: A47J 37/06

(54) **A grilling device for preparing food**

(71) Applicant: Koninklijke Philips Electronics N.V., 5621 BA Eindhoven (NL)
(72) Inventor: Van Aken, Timotheus, J.M., 5600 AE Eindhoven (NL)
(74) Representative: Damen, Daniel Martijn

(57) **Abstract**

The present invention relates to a grilling device for preparing food. The grilling device has a grill plate (3) with a grilling surface against which food items are locatable to be heated, a heater (22) to heat the grill plate (3) and a reflector (16) to reflect heat towards the grill plate (3). The grill plate (3) also includes a temperature sensor (22) configured to detect the temperature of the reflector (16) and a control unit configured to control operation of the heater (22) dependent on the temperature detected by the temperature sensor (22).

## Description

### FIELD OF THE INVENTION

The present invention relates to a grilling device for preparing food.

### BACKGROUND OF THE INVENTION

Grilling devices or grills for preparing food are well known. A conventional grill generally comprises a grill plate which is heated by a heating element to raise the temperature of the grill plate to a desired temperature, and then food items are placed directly on an upper face of the grill plate to heat and/or cook the food items.

In recent years, double-sided grills have been developed which has two housing parts which are hingable about each other. Each housing part has a grill plate and one of the housing parts is pivotable about the other housing part so that the two grill plates oppose each other. Food items are placed on one of the grill plates and the other grill plate is manoeuvred over the grill plate with food items placed thereon so that food items are disposed therebetween. The food items are then heated and/or cooked simultaneously by the opposing grill plates.

A problem with such conventional grills is that it is difficult to clean the grill plates once the food stuffs have been cooked and removed from the grill plate. Therefore, it is known to provide a grill plate which is removable from its housing to be cleaned. However, it is also necessary to determine the temperature of the grill plate to ensure that the desired temperature of the upper surface of the grill plate is maintained to allow food items to be cooked and/or heated as desired, and also to prevent overheating of the grill.

Therefore, it is known to provide a sensor which detects the temperature of the grill plate and is configured to control the operation of the heating element to control the temperature of the grill plate. Such a sensor is generally mounted to the grill plate, in which case the grill plate cannot be removed from the housing, or is positioned to locate against or proximate to the grill plate to measure the temperature of the grill plate directly.

However, one disadvantage of a conventional grilling device as described above is that the placement of food, in particular cold food, on the grill plate proximate to the sensor can have a localized effect on the temperature of the grill plate in the region of the food stuffs. Therefore, the sensor will indicate that the temperature is below the desired temperature and cause the grill plate to overheat due to over operation of the heater. This can have a disadvantageous effect on food items disposed on other parts of the grill plate, and may also cause damage to the grill itself due to overheating. For example, the temperature of the grill plate is known to be raised beyond the point at which PTFE coatings which are used on grill plates to prevent food items sticking thereto start to deteriorate.

### SUMMARY OF THE INVENTION

Therefore, it is an object of the invention to provide a grilling device for preparing food which substantially alleviates or overcomes the problems mentioned above.

According to the present invention, there is provided a grilling device for preparing food comprising a grill plate having a grilling surface against which food items are locatable to be heated, a heater to heat the grill plate, a reflector to reflect heat towards the grill plate, a temperature sensor configured to detect the temperature of the reflector and a control unit configured to control operation of the heater dependent on the temperature detected by the temperature sensor.

Advantageously, the heater for heating the grill plate is disposed on an opposing side of the grill plate to the grilling surface.

Conveniently, the heater is disposed between the grill plate and the reflector. The temperature sensor may be conductively connected to the reflector.

Advantageously, the temperature sensor is conductively connected to the reflector on an opposing side of the reflector to the grill plate.

In one embodiment, the temperature sensor is directly connected to the reflector.

In another embodiment, a conductive element is disposed between the temperature sensor and the reflector.

Advantageously, the conductive element is fixedly mounted to the reflector.

The conductive element may have first and second surfaces extending transverse to each other, the first surface communicating with the reflector and the second surface communicating with the temperature sensor.

The conductive element may be an aluminium flange.

The temperature sensor may be elongate and may be disposed to extend parallel to the grill plate.

In another embodiment, the reflector is a first reflector, and a second reflector is disposed between the first reflector and the heater.

Conveniently, the temperature sensor and control unit are a thermostat.

Advantageously, the reflector is disposed between the heater and the temperature sensor.

The temperature sensor may be positioned adjacent to but slightly spaced from the lower side of the reflector to detect the temperature of the reflector.

The temperature of the reflector may be detected by positioning the temperature sensor in the radiation shadow of the reflector in respect of heat radiated by the heater. An advantage of this arrangement is that the reflector, being disposed between the sensor and the heater, shields the sensor from the heater and this shielding function is improved by the reflecting properties of the reflector. Therefore, there is synergy between the shielding and the reflecting effects to mitigate large temperature changes detected by the temperature sensor.

In one embodiment, the heater is spaced from the reflector.

Conveniently, the grill plate is removable from the housing.

Advantageously, the grill plate is reversible in the housing.

### BRIEF DESCRIPTION OF THE DRAWINGS

Preferred embodiments of the invention will now be described, by way of example only, with reference to the accompanying drawing, in which:
FIGURE 1 shows a schematic cross-sectional view of a grilling device for preparing food;
FIGURE 2 shows a schematic cross-sectional view of another embodiment for a grilling device for preparing food; and
FIGURE 3 shows a schematic cross-sectional view of another embodiment for a grilling device for preparing food.

### DETAILED DESCRIPTION OF THE EMBODIMENTS

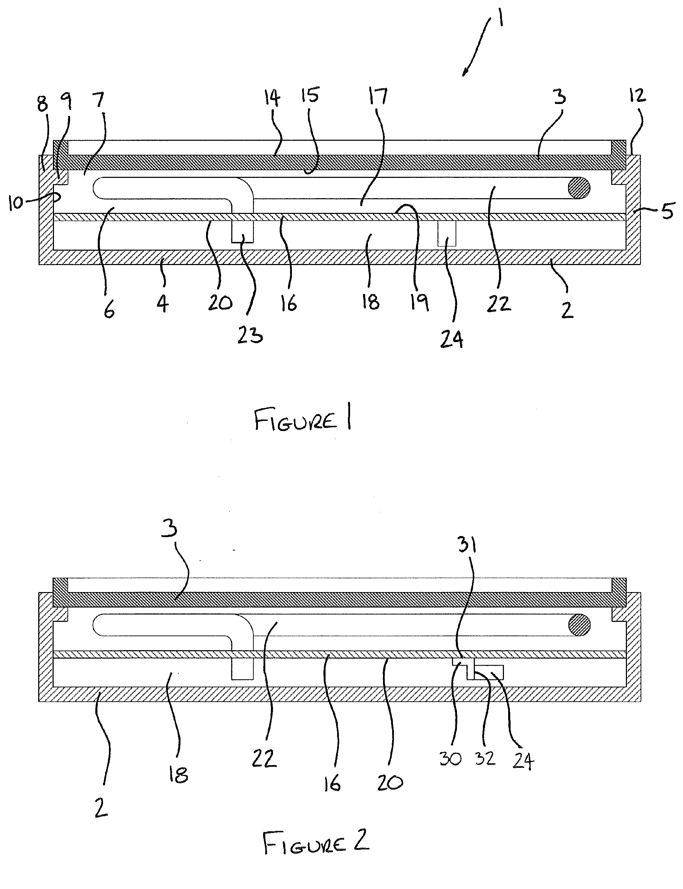

A grilling device or grill 1 for preparing food is shown in Figure 1. The grill 1 has a housing 2, and a grill plate 3.

The housing 2 has a base 4 and side walls 5 upstanding from and extending around the edge of the base 4. A cavity 6 is defined in the housing and an opening 7 to the cavity 6 is formed at an upper end 8 of the housing 2. The housing 2 is formed from a rigid heat resistant material. A shoulder 9 extends around the inner surface 10 of the rim 12 of the side walls 5 to support the grill plate 3.

The grill plate 3 comprises an upper face 14 and a lower face 15 which extend parallel to each other. The grill plate 3 is formed from a conductive material, for example stainless steel, cast iron or aluminium, and in this embodiment is coated in a non-stick material such as a PTFE coating. One face of the grill plate 3 has a planar surface, and the other face of the grill plate 4 has a plurality of upstanding ridges (not shown) extending across the face, so that the grill plate 3 is reversible and may be disposed on the housing 2 with either face exposed. It will be appreciated that the exposed face of the grill plate 3 forms the grilling surface on which food items to be cooked are located. The reversible grill plate 3 allows the grilling surface of the grill plate to be changed.

The grill plate 3 is received over the upper end 8 of the housing 2 to enclose the opening 7 to the cavity 6. An outer edge of the grill plate 3 is received on the shoulder 9 of the grill plate 3 so that the grill plate 3 is supported by the side walls 5 of the housing 2.

A mounting means (not shown) mounts the grill plate 3 to the housing 2. The mounting means is releasable so that the grill plate 3 is removable from the grill plate 3. In one embodiment, the mounting means includes a flange (not shown) formed along one edge of the grill plate 3 which is received under a corresponding lip (not shown) formed in the housing, together with a latch (not shown) on the housing which locates over an opposing edge of the grill plate 3 to hold the grill plate 3 in position.

A reflector 16 is received in the cavity 6 of the housing 2 and is fixedly mounted therein to extend across the cavity 6 between the side walls 5. The reflector 16 extends parallel to the grill plate 3 and is spaced from both the base 4 and the grill plate 3 so that the reflector 16 divides the cavity 6 into two distinct parts, a heating chamber 17 defined between the reflector 16 and the grill plate 3, and a component chamber 18 defined between the base 4 of the housing 2 and the reflector 16.

The reflector 16 has an upper surface 19 and a lower surface 20. The upper surface 19 is reflective to reflect heat towards the grill plate 3. The reflector 16 is formed from a rigid heat conductive material, such as aluminium, and the upper surface 19 may be formed by a reflective coating applied to the rigid heat conductive material.

A heater 22 is disposed in the heating chamber 17. The heater 22 in the present embodiment is an electric radiation heater, although it will be appreciated that alternative heating means may be used. The heater 22 comprises a bar element which extends around the heating chamber 17 parallel to the lower face 15 of the grill plate 3 and the upper surface 19 of the reflector 16.

The heater 22 is spaced from both the lower face 15 of the grill plate 3 and the upper surface 19 of the reflector 16, as well as the side walls 5 of the housing 2. Therefore, the heater 22 does not heat the grill plate 3, reflector 16 or housing 2 by conduction. Distal ends 23 of the bar element of the heater 22 extend through apertures (not shown) in the reflector 16 and into the component chamber 18 so that they may be connected to a power supply (not shown) received in the component chamber 18. Alternatively, wires (not shown) extend through apertures (not shown) in the reflector 16 to the distal ends of the bar element.

A temperature sensor 24 is disposed in the component chamber 18. The temperature sensor 24 is fixedly mounted to the lower surface 20 of the reflector 16, on an opposing side of the reflector 16 to the heater 22 so that the temperature sensor is in direct contact with the reflector 16 and is conductively connected thereto. The temperature sensor 24 is provided to detect the temperature of the reflector 16, and so is able to accurately detect the temperature of the reflector 16. One advantage of this arrangement is that the temperature sensor is in the radiation shadow of the reflector, and so the reflector shields the sensor from heat radiated from the heater, and this shielding is enhanced due to the reflective surface of the reflector.

A control unit (not shown) is connected to the temperature sensor by wires (not shown). The control unit (not shown) is also connected to the power supply to the heater 22 to control operation of the heater 22, and to an input device (not shown), such as a control knob mounted to a front side of the grill 1 to set the desired temperature of the grill plate 3 for heating and/or cooking food items.

In one embodiment the temperature sensor 24 and control unit are combined as a thermostat which is mounted to the reflector 16 to detect the temperature of the reflector 16 and to control operation of the heater 22, dependent on the setting determined by the control knob. An advantage of using a thermostat is that the size of the combined temperature sensor and control unit is reduced and the need for connecting wires is removed.

During use, a user operates the grill 1 and adjusts the control knob to the desired input setting. The heater 22 is then operated to heat the grill plate 3, and heat is transferred to the grill plate 3 by radiation and convection. As the heater emits heat the temperature of the grill plate 3 increases and heat is conducted from the lower side of the grill plate 3 to the exposed upper surface 14 thereof.

The upper face 19 of the reflector 16 reflects heat radiated from the heater 22 and the lower surface of the grill plate 3 towards the grill plate 3. Therefore, the efficiency of the grill is increased. As the reflector 16 reflects heat emitted by the heater 22, it is also heated up so that the temperature of the reflector increases. The reflector 16 is formed from a conductive material and so heat conducts throughout the reflector 16.

The temperature sensor 24 mounted to the lower face 20 of the reflector 16 is therefore able to detect the temperature of the reflector 16. As the temperature sensor 24 is mounted to the lower face 20 it is not directly heated by the heater 22. The temperature sensor 24 communicates with the control unit (not shown), and the control unit then operates the heater 22 to maintain the grill plate's temperature near to a desired set point temperature based on the output of the temperature sensor 24. It will be appreciated that the temperature of the reflector 16 will mirror, but be offset from, the temperature of the grill plate 3. Therefore, it is possible to monitor the temperature of the grill plate 3 by detecting the temperature of the reflector 16.

When items of food are placed on the upper surface 14 of the grill plate 3 acting as the grilling surface, the items of food are cooked by the heat from the grill plate 3 by radiation, conduction and/or convection. When cold items of food are placed on the grill plate 3, it will be appreciated that a localized part of the grill plate 3 will cool due to the difference in temperature between the grill plate 3 and the food. However, as the temperature of the grill plate 3 is determined by the temperature of the reflector 16 detected by the temperature sensor 24 locating against the reflector 16, localized differences in temperature of the grill plate 3 do not affect the temperature detected by the temperature sensor 24. Therefore, unlike a conventional grill in which a temperature sensor detects the temperature of a point of the grill plate, control of the heater is not affected by a localized temperature difference in the grill plate 3. Therefore, the control unit does not operate the heater in response to a localized temperature difference and so the grill plate does not overheat.

The temperature of the grill plate 3 is then maintained within a predetermined range determined by the setting of the control knob by the control unit controlling operation of the heater in response to the temperature of the reflector 16 detected by the temperature sensor 24.

Once the food items have been heated and/or cooked as desired, the food items are removed from the grilling surface. Once the food items (not shown) have been removed from the grilling surface the grill plate 3 is removable from the housing 2 so that it can be easily cleaned. Furthermore, the grill plate is reversible so that the upper surface 14 and lower surface 15 are swapped and the lower surface 15 is then uppermost and becomes the grilling surface on which food items are placed.

An alternative embodiment of a grilling device will now be described with reference to Figure 2. The grilling device according to this embodiment is generally the same as the grilling device described above, and so a detailed description will be omitted herein. Furthermore, features and components corresponding to features and components described in the forgoing embodiments will retain the same reference numerals.

The embodiment shown in Figure 2 further comprises an aluminium flange acting as a conductive element 30. The conductive element 30 is L-shaped and comprises a first reflector locating face 31 and a second sensor locating face 32 which extends transverse to the first reflector locating face 31.

The first reflector locating face 31 of the conductive element 30 is fixedly mounted to the lower face 20 of the reflector 16 so that the conductive element 30 is conductively connected to the reflector 16 and is received in the component chamber 18. The temperature sensor 24 is fixedly mounted to the conductive element 30 so that the temperature sensor 24 is conductively connected to the conductive element 30. Therefore, the temperature sensor 24 is conductively connected to the reflector 16.

An advantage of the above arrangement is that the orientation of the temperature sensor 24 is not determined by the positioning of the reflector 16. For example, in the present embodiment the temperature sensor 24 is rotated through 90 degrees, so that an elongate temperature sensor 24 can be conductively connected to the conductive element 30 without needing the depth of the component chamber 30 and therefore the housing 2 to be increased to receive it. Furthermore, by positioning the temperature sensor 24 to extend parallel to the reflector 16 it is simpler to connect the temperature sensor to other components disposed in the component chamber 18, for example the control unit (not shown). Alternatively, when the temperature sensor and control unit are combined as a thermostat, it is advantageous to conductively connect the thermostat to the reflector to the reflector so that the thermostat extends parallel to the reflector 16 and can then be easily connected to a control knob (not shown) in the side wall 5 of the housing 2.

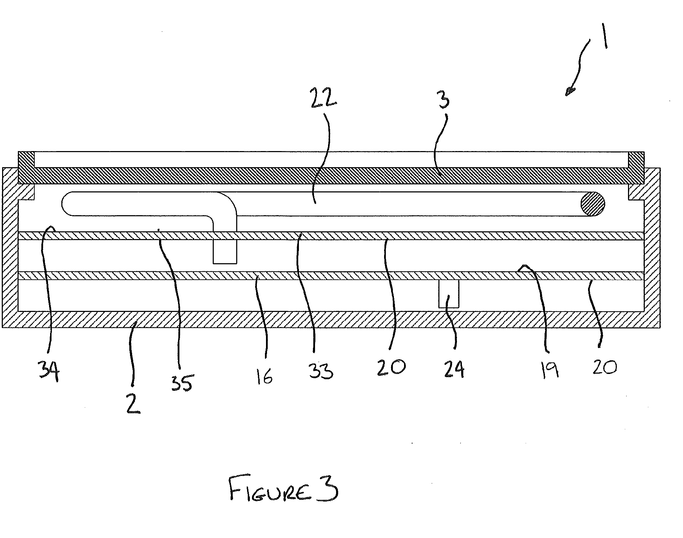

An alternative embodiment of a grilling device will now be described with reference to Figure 3. The grilling device according to this embodiment is generally the same as the embodiments of a grilling device described above, and so a detailed description will be omitted herein. Furthermore, features and components corresponding to features and components described in the forgoing embodiments will retain the same reference numerals. However, in this embodiment the grill 1 includes a second reflector 33 disposed between the first reflector 16 and the heater 22.

In this embodiment, the second reflector 33 extends parallel but spaced from the first reflector 16. An upper face 34 of the second reflector 33 has a reflective surface and so heat radiated from the heater 22 is reflected back towards the grill plate 3. It will be appreciated that during use the temperature of this second reflector 33 will increase. Therefore, heat radiated from a lower face 35 of the second reflector 33 into the space between the reflectors 16, 33 will be reflected back towards the second reflector 33 by the first reflector 16. An advantage of this arrangement is that the two reflectors limit the heat transfer to the housing 4 and so the temperature of the housing is minimized. It will be appreciated that the lower face 35 of the second reflector 33 will not have a reflective surface to minimize heat being reflected towards the first reflector 16.

In this embodiment, the temperature sensor 24 is conductively connected to the first reflector 16. As shown in Figure 3, the sensor 24 is directly connected to the first reflector 16, although it will be appreciated that the sensor 24 may be connected by a conductive element. Therefore, the operation of the heater 22 to maintain the grill plate's temperature near to a desired set point temperature is controlled by the control unit (not shown) based on the output of the temperature sensor 24. However, it will be appreciated that the temperature offset determined by the control unit will be greater than if the sensor 24 was connected to the second reflector 33 nearest to the grill plate 3 because a proportion of the heat is reflected back towards the grill plate by the second reflector 33.

Although in the above described embodiments the temperature sensor is conductively connected to the reflector either directly, or by a conductive element, it will be appreciated that the invention is not limited thereto. For example, in an alternative embodiment the temperature sensor is positioned adjacent to but slightly spaced from the lower side of the reflector to detect the temperature of the reflector.

It will be appreciated that it is possible to detect the temperature of the reflector by positioning the temperature sensor in the radiation shadow of the reflector in respect of heat radiated by the heater. The arrangement of the grill enables this to happen by the reflector being positioned between the heater and the sensor. Therefore, the sensor is out of the direct line of sight of the heater. An advantage of this arrangement is that the reflector, being disposed between the sensor and the heater, shields the sensor from the heater and this shielding function is improved by the reflecting properties of the reflector. Therefore, there is synergy between the shielding and the reflecting effects to mitigate large temperature changes detected by the temperature sensor.

Although the above embodiments relate to grilling devices having generally planar grill plates, it will be appreciated that the invention is not limited thereto and the grill plate may also have recesses formed therein and be configured to heat and or cook specific food items, for example waffles, toasted sandwiches, donuts, or pies.

Although the above description of grilling devices relates to a grilling device with a single grill plate, it will be appreciated that the above arrangement also applies to a grilling device with more than two grill plates. For example, in an alternative embodiment of a grilling device, the grilling device has two housing parts which are hingable about each other. Each housing part has a grill plate, a reflector and a sensor mounted to the reflector. One of the housing parts is pivotable about the other housing part so that the two grill plates oppose each other and food items can be located therebetween.

Although claims have been formulated in this application to particular combinations of features, it should be understood that the scope of the disclosure of the present invention also includes any novel features or any novel combinations of features disclosed herein either explicitly or implicitly or any generalization thereof, whether or not it relates to the same invention as presently claims in any claim and whether or not it mitigates any or all of the same technical problems as does the parent invention. The applicants hereby give notice that new claims may be formulated to such features and/or combinations of features during the prosecution of the present application or of any further application derived therefrom. It is noted that the invention relates to all possible combinations of features recited in the claims.

## Claims

1. A grilling device for preparing food comprising a grill plate (3) having a grilling surface (19) against which food items are locatable to be heated, a heater (22) to heat the grill plate (3), a reflector (16) to reflect heat towards the grill plate (3), a temperature sensor (24) configured to detect the temperature of the reflector (16) and a control unit configured to control operation of the heater (22) dependent on the temperature detected by the temperature sensor (24).

2. A grilling device according to claim 1, wherein the heater (22) for heating the grill plate (3) is disposed on an opposing side of the grill plate (3) to the grilling surface (19).

3. A grilling device according to claim 1 or claim 2, wherein the heater (22) is disposed between the grill plate (3) and the reflector (16).

4. A grilling device according to claim 3, wherein the temperature sensor (24) is conductively connected to the reflector (16).

5. A grilling device according to claim 4, wherein the temperature sensor (24) is conductively connected to the reflector (16) on an opposing side of the reflector (16) to the grill plate (3).

6. A grilling device according to claim 4 or claim 5, wherein the temperature sensor (24) is directly connected to the reflector (16).

7. A grilling device according to claim 4 or claim 5, wherein a conductive element (30) is disposed between the temperature sensor (24) and the reflector (16).

8. A grilling device according to claim 7, wherein the conductive element (30) is fixedly mounted to the reflector (16).

9. A grilling device according to claim 7 or claim 8, wherein the conductive element (30) has first and second surfaces (31, 32) extending transverse to each other, the first surface (31) communicating with the reflector (16) and the second surface (32) communicating with the temperature sensor (24).

10. A grilling device according to claim 9, wherein the temperature sensor (24) is elongate and is disposed to extend parallel to the grill plate (3).

11. A grilling device according to claim 10, wherein the reflector is a first reflector (16), and a second reflector (33) is disposed between the first reflector (16) and the heater (22).

12. A grilling device according to any preceding claim, wherein the temperature sensor (24) and control unit are a thermostat.

13. A grilling device according to any preceding claim, wherein the reflector (16) is disposed between the heater (22) and the temperature sensor (24).

14. A grilling device according to any preceding claim, further comprising a housing (2), wherein the grill plate (3) is removable from the housing (2).

15. A grilling device according to claim 14, wherein the grill plate (3) is reversibly received in the housing (2).
